# EUROPEAN PATENT APPLICATION

(11) **EP 4 703 964 A1**
(43) Date of publication of application: **04.03.2026**
(21) Application number: 25197833.4
(22) Date of filing: 25.08.2025
(51) Int. Cl.: G06F 40/30, G06F 18/00, G06F 40/35, G06V 10/00

(54) **COMPUTER PROGRAM, INFORMATION PROCESSING METHOD, AND INFORMATION PROCESSING APPARATUS**

(30) Priority: 30.08.2024 JP 2024148201
(71) Applicant: FUJITSU LIMITED, Kawasaki-shi, Kanagawa 211-8588 (JP)
(72) Inventor: FUKUDA, Takasaburo, Kawasaki-shi, Kanagawa, 211-8588 (JP)
(74) Representative: Hoffmann Eitle

(57) **Abstract**

An information processing apparatus inputs, to a dialogue system using a machine learning model, a first directive instructing estimation of a plurality of first information items based on data including the plurality of first information items and a plurality of second information items representing the relationships between the plurality of first information items. The information processing apparatus inputs, to the dialogue system, a second directive instructing semantic estimation of the first information items based on third information related to the meaning of the first information items. The information processing apparatus inputs, to the dialogue system, a third directive instructing estimation of the second information items based on the data. The information processing apparatus acquires, from the dialogue system, output information generated based on the second information items estimated in response to the third directive.

## Description

### FIELD

The present embodiments discussed herein relate to a computer program, an information processing method, and an information processing apparatus.

### BACKGROUND

One type of model generated through machine learning is a large language model (LLM). An LLM is a machine learning model that understands natural language and other types of content and generates responses. For example, an LLM may be configured as a neural network with a large number of parameters. LLMs may be used as generative artificial intelligence (AI) systems that generate responses in natural language. Generative AI systems also incorporate multimodal interactive techniques that combine not only linguistic information but also image information.

As an AI-related technique, for example, a table-image recognition device has been proposed, which is able to correctly recognize the structure of a complicated table. A machine learning model has also been proposed, which uses a generative model that is usable within a creative visual editor. A system for recognizing the arrangement of multiple objects on a computing device has also been proposed. Systems for automatically extracting information from a flowchart image have also been proposed. Techniques for training and using a task-oriented dialogue system have also been proposed. Furthermore, a technique for recognizing individual symbols in an offline hand-drawn diagram and understanding the structure has also been proposed. See, for example, the following literatures.
International Publication Pamphlet No. WO 2023/188362 U.S. Patent Application Publication No. 2024/0135611
Japanese National Publication of International Patent Application No. 2019-506672
U.S. Patent Application Publication No. 2021/0365679 Japanese Laid-open Patent Publication No. 2024-027070
Jiaqi Fang, Zhen Feng and Bo Cai, "DrawnNet: Offline Hand-Drawn Diagram Recognition Based on Keypoint Prediction of Aggregating Geometric Characteristics," Entropy, 2022, 24, 425, MDPI, 19 March 2022

Data to be recognized by a machine learning model may include types of information that are difficult to recognize accurately. For example, a flow diagram represents a process flow or screen transitions using nodes and edges. Consider the case where a conventional machine learning model is used to recognize a flow diagram. In this case, the accuracy of recognizing the connections of edges may decrease if the start point and the end point of the edges are not clear or if edges intersect with each other. For example, if the connections of the edges are erroneously recognized, the process flow represented in the flow diagram may fail to be correctly recognized.

In the case where data is recognized by a machine learning model, insufficient recognition accuracy for some types of information, as described above, may result in misrecognition of the entire data.

### SUMMARY

In one aspect, an object of the present disclosure is to improve the accuracy of data recognition.

In one aspect, there is provided a computer program that causes a computer to perform a process including: inputting a first directive to a dialogue system that uses a machine learning model, the first directive instructing estimation of a plurality of first information items based on data including the plurality of first information items and a plurality of second information items, the plurality of second information items representing relationships between the plurality of first information items; inputting a second directive to the dialogue system, the second directive instructing semantic estimation of the first information items based on third information related to meanings of the first information items; inputting a third directive to the dialogue system, the third directive instructing estimation of the second information items based on the data; and acquiring, from the dialogue system, output information generated based on the second information items estimated in response to the third directive.

### BRIEF DESCRIPTION OF DRAWINGS

FIG. 1 illustrates an example of an information processing method according to a first embodiment;
FIG. 2 illustrates an example of a system configuration according to a second embodiment;
FIG. 3 illustrates an example of hardware of a terminal device;
FIG. 4 illustrates a first example of a flow diagram;
FIG. 5 illustrates a second example of a flow diagram;
FIG. 6 is a block diagram illustrating functions of each device for processing a document using an LLM;
FIG. 7 illustrates an example of recognizing a flow diagram;
FIG. 8 illustrates an example of a legend diagram.
FIG. 9 is a flowchart illustrating an example procedure for a document task;
FIG. 10 illustrates an example of a document to be processed;
FIG. 11 is a flowchart illustrating an example procedure for a flow diagram analysis process;
FIG. 12 is a diagram (1/6) illustrating an example of flow diagram analysis;
FIG. 13 is a diagram (2/6) illustrating the example of the flow diagram analysis;
FIG. 14 is a diagram (3/6) illustrating the example of the flow diagram analysis;
FIG. 15 is a diagram (4/6) illustrating the example of the flow diagram analysis;
FIG. 16 is a diagram (5/6) illustrating the example of the flow diagram analysis;
FIG. 17 is a diagram (6/6) illustrating the example of the flow diagram analysis;
FIG. 18 illustrates an example of a document including a hand-drawn flow diagram;
FIG. 19 illustrates an example of image understanding of a legend diagram;
FIG. 20 illustrates an example of a result of inferring the meanings of nodes; and
FIG. 21 illustrates an example of a result of recognizing a flow diagram.

### DESCRIPTION OF EMBODIMENTS

Hereinafter, embodiments will be described with reference to the drawings. A plurality of embodiments may be combined unless they exclude each other.

### [First Embodiment]

A first embodiment relates to an information processing method for recognizing data with high accuracy using a machine learning model.

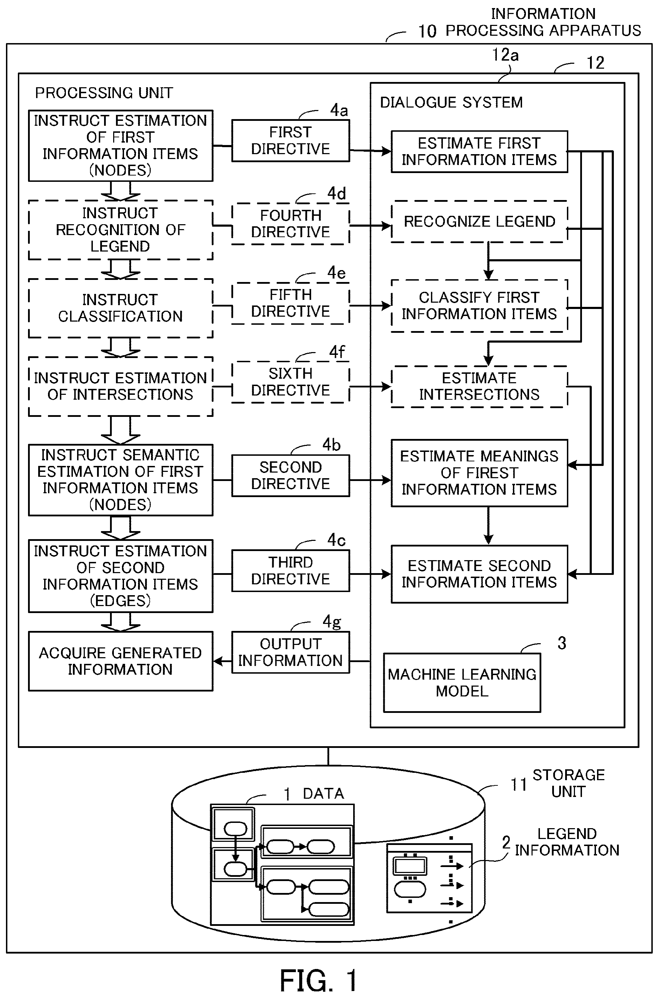

FIG. 1 illustrates an example of an information processing method according to the first embodiment. FIG. 1 illustrates an information processing apparatus 10 for implementing the information processing method according to the first embodiment. The information processing apparatus 10 is able to implement the information processing method according to the first embodiment, for example, by executing an information processing program.

The information processing apparatus 10 includes a storage unit 11 and a processing unit 12. The storage unit 11 is, for example, a memory or a storage device included in the information processing apparatus 10. The processing unit 12 is, for example, a processor included in the information processing apparatus 10.

The storage unit 11 stores, for example, data 1 and legend information 2. The data 1 includes a plurality of first information items and a plurality of second information items representing the relationships between the plurality of first information items. The data 1 is a flow diagram formed of nodes and edges, for example. In the flow diagram, the nodes are examples of the first information items, and the edges are examples of the second information items. The legend information 2 is information that indicates a display mode for each meaning of the first information items. For example, in the case where the first information items are nodes, the legend information 2 indicates the meaning of each shape of the nodes.

The processing unit 12 is able to execute a dialogue system 12a. The dialogue system 12a is an information processing function that is capable of performing dialogue in natural language based on chain-of-thought reasoning using a machine learning model 3. The machine learning model 3 is a multimodal model that is able to take, for example, images and natural language texts as inputs.

The processing unit 12 performs predetermined processing on the data 1 using the dialogue system 12a. For example, the processing unit 12 inputs, to the dialogue system 12a, a first directive 4a instructing the estimation of the first information items based on the data 1. In response, the dialogue system 12a estimates the first information items (for example, nodes) included in the data 1.

Thereafter, the processing unit 12 inputs a certain directive to the dialogue system 12a, and further inputs, to the dialogue system 12a, a second directive 4b instructing the semantic estimation of the first information items based on third information related to the meanings of the first information items. In response, the dialogue system 12a estimates the meanings of the first information items.

Further, the processing unit 12 inputs, to the dialogue system 12a, a third directive 4c instructing the estimation of the second information items based on the data 1. In response, the dialogue system 12a estimates the second information items included in the data 1.

Then, the processing unit 12 acquires output information 4g generated based on the second information items estimated in response to the third directive 4c, from the dialogue system 12a. For example, as the output information 4g, the processing unit 12 acquires information indicating the relationships between the first information items indicated by the second information items.

As described above, the processing unit 12 first causes the dialogue system 12a to estimate the first information items and the meanings thereof, and then causes the dialogue system 12a to estimate the plurality of second information items representing the relationships between the plurality of first information items. Since the dialogue system 12a performs chain-of-thought reasoning using the machine learning model 3, the second information items are estimated in consideration of the results of estimating the first information items and the meanings thereof. Since the meanings of the first information items are already recognized at the time of estimating the second information items, it is possible to estimate the second information items, which represent the relationships between the first information items, in consideration of the meanings of the first information items. As a result, the accuracy of estimating the second information items is improved.

The improvement in the accuracy of estimating the second information items leads to an improvement in the accuracy of recognizing the entire data 1. As a result, the processing unit 12 is able to perform, for example, various inference processes related to the data 1 with high reliability.

As the third information, the legend information 2 is used, for example. For example, before the input of the second directive 4b to the dialogue system 12a, the processing unit 12 inputs, to the dialogue system 12a, a fourth directive 4d instructing the recognition of the legend information 2, which indicates the display mode for each meaning of the first information items. When inputting the second directive 4b to the dialogue system 12a, the processing unit 12 uses the legend information 2 recognized in response to the fourth directive 4d, as the third information.

In this manner, the legend information 2 is set as the third information related to the meanings of the first information items. By doing so, it becomes possible to accurately estimate the meanings of the first information items in the case where the first information items have the display modes corresponding to their meanings. Since the meanings of the first information items are recognized with high accuracy, for example, the accuracy of estimating the second information items that connect first information items having the same kind of meaning is improved.

In addition, in the case where the first information items are represented by symbols that differ in shape depending on their meanings, the processing unit 12 may use the result of classifying the first information items based on their shapes as the third information. For example, the processing unit 12 inputs, to the dialogue system 12a, a fifth directive 4e instructing the classification of the first information items based on their shapes. As a result, the first information items are classified based on their shapes. The first information items having the same shape belong to the same group. Then, when inputting the second directive 4b to the dialogue system 12a, the processing unit 12 uses the result of classifying the first information items in response to the fifth directive 4e, as the third information.

In this manner, the classification result is set as the third information related to the meanings of the first information items. By doing so, it becomes possible to accurately estimate each group of first information items having the same meaning. Since the groups of first information items having the same meaning are recognized, for example, the accuracy of estimating second information items that connect first information items having the same kind of meaning is improved.

Alternatively, the processing unit 12 may use, as the third information, the result of classifying the first information items based on words or texts included in the nodes, which are the first information items.

In the case where the data 1 is a flow diagram, nodes, which are the first information items, are represented by symbols that differ in shape depending on their meanings. Edges, which are the second information items, are represented by lines drawn between two symbols. In this case, the processing unit 12 may cause the dialogue system 12a to estimate the edges by effectively using the intersections between the nodes and the edges. For example, the processing unit 12 inputs, to the dialogue system 12a, a sixth directive 4f instructing the estimation of the intersections between the symbols of the nodes and the lines of the edges. In response, the dialogue system 12a estimates the intersections between the nodes and the edges. When inputting the third directive 4c to the dialogue system 12a, the processing unit 12 uses, as the third directive 4c, a text instructing the estimation in which importance is placed on the meanings of the first information items related to the intersections estimated in response to the sixth directive 4f.

In this way, the processing unit 12 causes the dialogue system 12a to estimate the intersections, and then instructs the dialogue system 12a to estimate the edges while placing importance on the meanings of the first information items related to the intersections. By doing so, the dialogue system 12a is prevented from being induced into excessive inference in non-intersecting areas. As a result, the accuracy of the edge estimation is improved.

### [Second Embodiment]

A second embodiment relates to a computer system that executes tasks of processing documents including flow diagrams (or flowcharts) using an LLM service provided over a network, such as a cloud computing system. The flow diagrams here are diagrams that each represent a flow of processing, screens, or another using nodes and edges. The nodes are represented by symbols of predetermined shapes, and the edges are represented by lines connecting the nodes. The flow diagrams include various types of diagrams that combine nodes and edges, such as sequence diagrams and activity diagrams defined in the unified modeling language (UML).

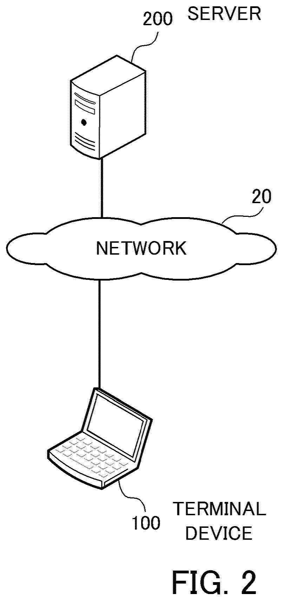

FIG. 2 illustrates an example of a system configuration according to the second embodiment. A terminal device 100 is connected to a server 200 via a network 20. The terminal device 100 is a computer that is used by a user. The server 200 is a computer that provides a service using an LLM.

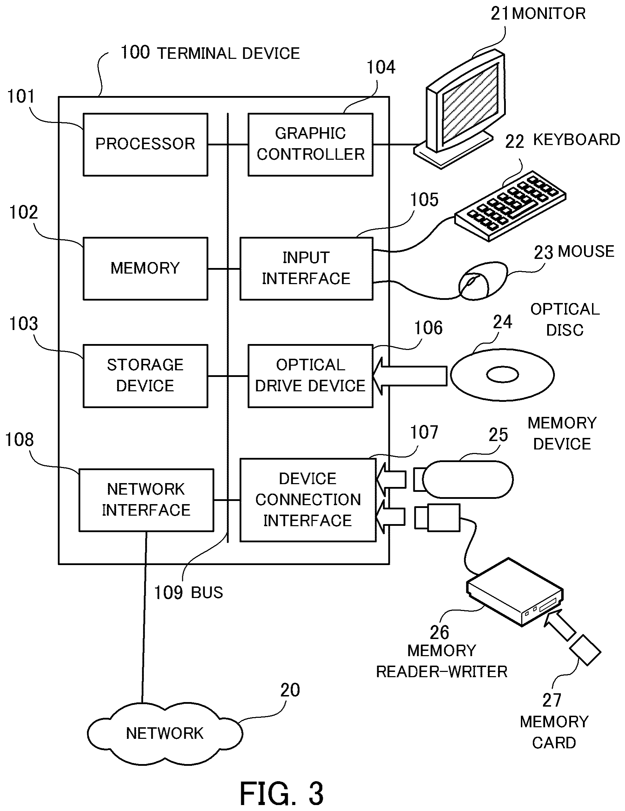

FIG. 3 illustrates an example of hardware of the terminal device. The entire terminal device 100 is controlled by a processor 101. A memory 102 and a plurality of peripheral devices are connected to the processor 101 via a bus 109.

The terminal device 100 may be a multiprocessor system including a plurality of processors. A set of processors in a multiprocessor system may be referred to as the processor 101. The processor 101 may be referred to as processor circuitry. Each of the plurality of processors is able to perform some or all of a plurality of processes performed by the terminal device 100. Different processes among a plurality of related processes may be performed by different processors.

The processor 101 is, for example, a central processing unit (CPU), a micro processing unit (MPU), or a digital signal processor (DSP). At least a part of the functions implemented by the processor 101 executing a program may be implemented by an electronic circuit such as an application specific integrated circuit (ASIC) or a programmable logic device (PLD).

The memory 102 is used as a main storage device of the terminal device 100. The memory 102 temporarily stores at least part of an operating system (OS) program and application programs to be executed by the processor 101. The memory 102 also stores various data used by the processor 101 during processing. As the memory 102, for example, a volatile semiconductor storage device such as a random access memory (RAM) is used.

The peripheral devices connected to the bus 109 include a storage device 103, a graphic controller 104, an input interface 105, an optical drive device 106, a device connection interface 107, and a network interface 108.

The storage device 103 electrically or magnetically writes and reads data to and from a built-in storage medium. The storage device 103 is used as an auxiliary storage device of the terminal device 100. The storage device 103 stores OS programs, application programs, and various data. As the storage device 103, for example, a hard disk drive (HDD) or a solid state drive (SSD) may be used.

The graphic controller 104 is an arithmetic device that performs image processing. The graphic controller 104 is, for example, a graphics processing unit (GPU). A monitor 21 is connected to the graphic controller 104. The graphic controller 104 displays images on the screen of the monitor 21 in accordance with instructions from the processor 101. Examples of the monitor 21 include a display device using organic electro luminescence (EL) and a liquid crystal display device. In the case where, for example, a GPU is used as the graphic controller 104, the graphic controller 104 is able to execute complicated numerical calculations such as matrix calculations.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on an optical disc 24 or writes data to the optical disc 24 using laser light or the like. The optical disc 24 is a portable storage medium on which data is recorded so as to be readable by reflection of light. The optical disc 24 may be a digital versatile disc (DVD), a DVD-RAM, a compact disc read only memory (CD-ROM), a CD-recordable (CD-R)/rewritable (CD-RW), or the like.

The device connection interface 107 is a communication interface for connecting peripheral devices to the terminal device 100. For example, a memory device 25 and a memory reader-writer 26 may be connected to the device connection interface 107. The memory device 25 is a storage medium having a function of communicating with the device connection interface 107. The memory reader-writer 26 is a device that writes data to a memory card 27 or reads data from the memory card 27. The memory card 27 is a card-type storage medium.

The network interface 108 is connected to the network 20. The network interface 108 transmits and receives data to and from other computers or communication devices via the network 20. The network interface 108 is a wired communication interface that is connected to a wired communication device such as a switch or a router via a cable. Alternatively, the network interface 108 may be a wireless communication interface that is communicatively connected to a wireless communication device such as a base station or an access point by radio waves.

The terminal device 100 is able to implement the processing functions of the second embodiment with the above-described hardware. The apparatus described in the first embodiment may also be implemented with hardware similar to that of the terminal device 100 illustrated in FIG. **3****.**

The terminal device 100 implements the processing functions of the second embodiment by executing a program recorded in a computer-readable storage medium, for example. The program describing the processing content to be executed by the terminal device 100 may be recorded in various storage media. For example, a program to be executed by the terminal device 100 may be stored in the storage device 103. The processor 101 loads at least a part of the program from the storage device 103 into the memory 102 and executes the program. The program to be executed by the terminal device 100 may be recorded on a portable storage medium such as the optical disc 24, the memory device 25, or the memory card 27. The program stored on the portable storage medium becomes executable after being installed in the storage device 103 under the control of the processor 101, for example. Alternatively, the processor 101 may read the program directly from the portable storage medium and execute the program.

Assume here, for example, the case where a design document in system development is reviewed using an LLM service provided by the server 200. In a design document for system development, a process flow may be represented by a flow diagram. By using an LLM capable of image recognition, for example, it is possible to confirm whether the process flow represented in the flow diagram in the design document conforms to the requirements of the system development.

Even with an LLM capable of image recognition, the accuracy of recognizing diagrams formed of nodes and edges, such as flow diagrams that are often used in the field of software engineering, may be insufficient. For example, in the case where edges have complicated shapes **(e.g.,** dotted lines or the like), in the case where nodes have a multilayered structure, or in the case where the boundary of a swimlane and an edge intersect with each other, the accuracy of recognizing the connection destinations of edges decreases.

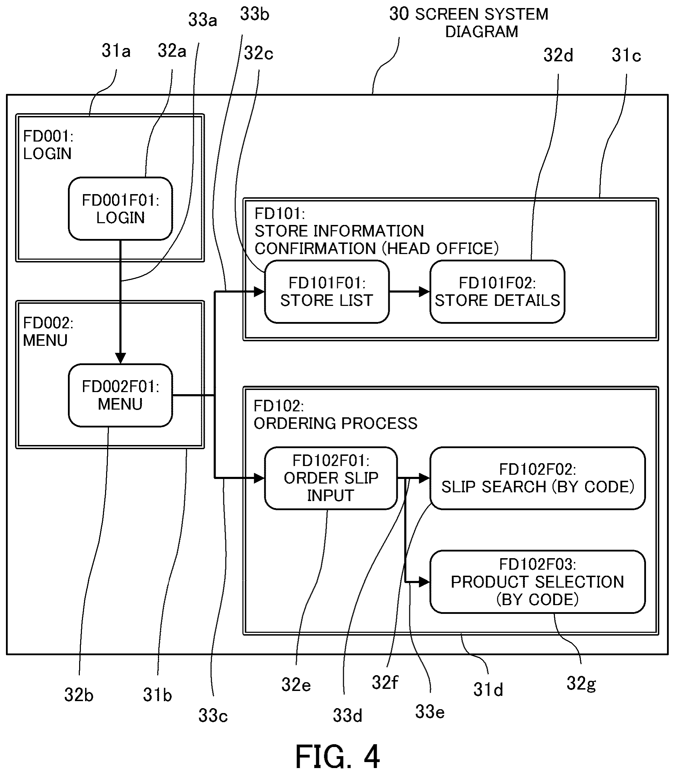

FIG. 4 illustrates a first example of a flow diagram. FIG. 4 illustrates, as an example of the flow diagram, a screen system diagram 30 representing screen transitions. The screen system diagram 30 includes process nodes 31a to 31d, screen nodes 32a to 32g, and edges 33a to 33e each connecting two of the screen nodes 32a to 32g. The process nodes 31a to 31d each represent a data processing function, and the screen nodes 32a to 32g each represent an input/output screen for data processing. The edges 33a to 33e each represent a transition between screens.

In the case where the above screen system diagram 30 is recognized by an LLM, the accuracy of recognizing the connections between the edges 33a to 33e and the screen nodes 32a to 32g may be reduced due to the intersections between the frames of symbols representing the process nodes 31a to 31d and the edges 33a to 33e.

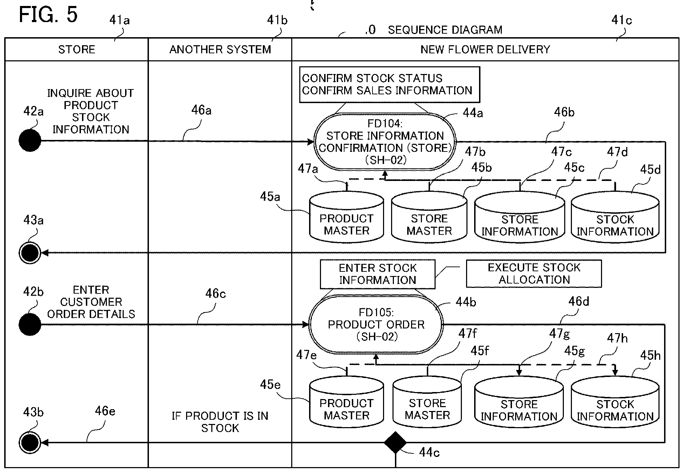

FIG. 5 illustrates a second example of a flow diagram. FIG. 5 illustrates, as an example of the flow diagram, a sequence diagram 40 representing a process flow. The sequence diagram 40 includes swimlanes 41a to 41c, each for an execution subject. Each of the swimlanes 41a to 41c represents processes to be performed by the corresponding execution subject.

The sequence diagram 40 includes start nodes 42a and 42b each representing the start of a process and end nodes 43a and 43b each representing the end of the process. The sequence diagram 40 also includes process nodes 44a and 44b, a branch node 44c, and others. These nodes are connected by edges 46a to 46e.

In addition, data nodes 45a to 45d representing data tables are connected to the process node 44a, which uses their data, by edges 47a to 47d. Similarly, data nodes 45e to 45h are connected to the process node 44b, which uses their data, by edges 47e to 47h.

In the sequence diagram 40, the lines that delimit the swimlanes 41a to 41c intersect with the edges 46a, 46c, and 46e. If the sequence diagram 40 is input to the LLM, such intersections are likely to cause misrecognition with respect to the start points and the end points of the edges 46a, 46c, and 46e.

If the LLM fails to recognize the flow diagram correctly, the LLM performs inference based on the erroneous recognition. As a result, a response generated by the LLM may include erroneous information.

To deal with this, the terminal device 100 improves the accuracy of recognizing a flow diagram using appropriate chain-of-thought (CoT). CoT is a prompting technique that provides information to the LLM step by step to cause the LLM to perform a sequential reasoning process.

For example, the terminal device 100 provides the LLM with an inference result regarding elements that have high recognition accuracy in an image, as supplementary information, and causes the LLM to infer elements that have low recognition accuracy in the image in a stepwise manner on the basis of that information. With regard to flow diagrams, nodes generally have higher recognition accuracy than edges. In addition, since the meanings of the nodes are indicated by their shapes, it is easy to estimate the meanings of the nodes. Therefore, the terminal device 100 causes the LLM to recognize the nodes and their meanings, and then causes the LLM to recognize the edges on the basis of the recognition results. Such appropriate prompting prevents erroneous recognition of the flow diagram.

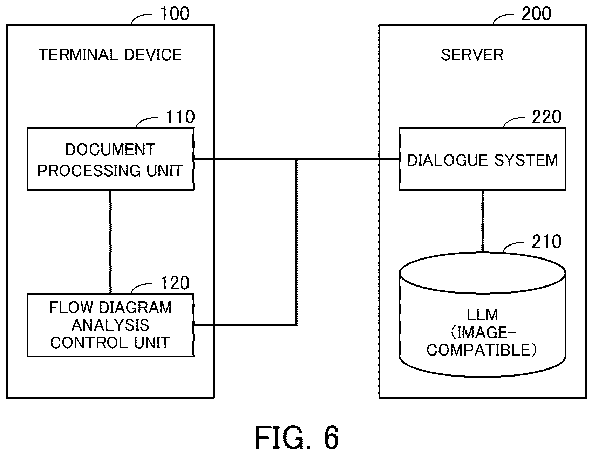

FIG. 6 is a block diagram illustrating functions of each device for processing a document using an LLM. The server 200 includes an LLM 210 and a dialogue system 220. The LLM 210 is a trained model of an image-compatible multimodal neural network. Character data, image data, audio data, and the like are usable as input data to the LLM 210. Output data from the LLM 210 also includes character data, image data, audio data, and the like.

The dialogue system 220 performs dialogue in natural language using the LLM 210. The dialogue system 220 is, for example, a service called a chatbot. The dialogue system 220 converts instructions (prompts) directed to the LLM 210, sent from the terminal device 100, into input data to the LLM 210. Then, the dialogue system 220 inputs the generated input data to the LLM 210 and obtains the output of the LLM 210. The dialogue system 220 transmits the output of the LLM 210 to the terminal device 100.

The terminal device 100 includes a document processing unit 110 and a flow diagram analysis control unit 120. The document processing unit 110 executes a user-specified task on a document. For example, the document processing unit 110 executes a task of reviewing a design document. When receiving a processing request from the user, the document processing unit 110 transmits, to the server 200, a prompt instructing the extraction of a flow diagram from the input document. At this time, the document processing unit 110 may instruct the extraction of a legend diagram that indicates the legend of the flow diagram, together with the flow diagram. When the flow diagram has been extracted, the document processing unit 110 instructs the flow diagram analysis control unit 120 to analyze the flow diagram. When the analysis of the flow diagram is completed, the document processing unit 110 performs task processing on the document using the result of analyzing the flow diagram. The document processing unit 110 uses the LLM 210, as appropriate, in the execution of the task processing.

The flow diagram analysis control unit 120 analyzes the flow diagram using the LLM 210 through CoT. For example, the flow diagram analysis control unit 120 instructs the server 200 to infer the nodes in the flow diagram using the LLM 210. Further, the flow diagram analysis control unit 120 instructs the server 200 to infer the semantic information of the nodes using the LLM 210. Thereafter, the flow diagram analysis control unit 120 instructs the server 200 to infer the edges connecting the nodes in the flow diagram using the LLM 210. The flow diagram analysis control unit 120 transmits the result of recognizing the flow diagram to the document processing unit 110.

The functions of each element illustrated in FIG. 6 may be implemented by causing the processor 101 to execute a program module corresponding to the element, for example.

In this way, the flow diagram analysis control unit 120 causes the LLM 210 to first infer elements that have high recognition accuracy, such as node information, and then causes the LLM 210 to infer elements that have low recognition accuracy, such as edges. This improves the inference accuracy.

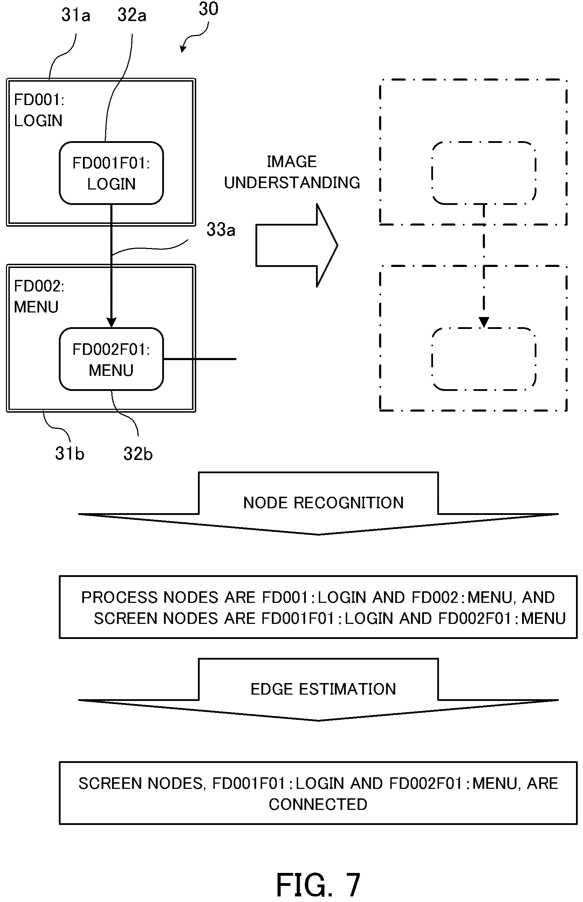

FIG. 7 illustrates an example of recognizing a flow diagram. FIG. 7 illustrates a process of recognizing the relationships among the process nodes 31a and 31b and the screen nodes 32a and 32b in the screen system diagram 30 (see FIG. 4).

When the image of the screen system diagram 30 is input to the LLM 210 by the flow diagram analysis control unit 120, image understanding is performed by the LLM 210. Through the image understanding, the LLM 210 understands, for example, that there are lines indicating the process nodes 31a and 31b and the screen nodes 32a and 32b. The result of understanding the image is temporarily stored within the server 200.

Next, in accordance with an instruction from the flow diagram analysis control unit 120, the LLM 210 recognizes nodes from the image. For example, the LLM 210 determines that regions enclosed by closed curves are nodes. In the case where intersecting lines are found, the LLM 210 is able to detect a closed curve by ignoring one of the lines and recognize the region enclosed by the closed curve as a node.

The LLM 210 is able to perform the node recognition with high accuracy. Therefore, the process nodes 31a and 31b and the screen nodes 32a and 32b are correctly recognized. For example, it is recognized that the process node 31a is a process node of "FD001: Login". It is recognized that the process node 31b is a process node of "FD002: Menu". It is recognized that the screen node 32a is a screen node of "FD001F01: Login". It is recognized that the screen node 32b is a screen node of "FD002F01: Menu".

Thereafter, in accordance with an instruction from the flow diagram analysis control unit 120, the LLM 210 estimates edges from the image. For example, since the nodes are already recognized correctly, lines connecting the recognized nodes are estimated as edges among the lines excluding the closed curves defining the nodes. Thus, the edge 33a connecting the screen nodes 32a and 32b is correctly estimated.

The flow diagram analysis control unit 120 may instruct the server 200 to enumerate the intersection points of lines using the LLM 210, with respect to the result of the image understanding. In this case, the flow diagram analysis control unit 120 causes the LLM 210 to infer the information on edges with greater consideration of the semantic information of the nodes in the vicinity thereof. By doing so, the LLM 210 is prevented from being misled to different meanings due to excessive inference in non-intersecting areas.

In the case where a legend diagram is provided, the flow diagram analysis control unit 120 is able to use the information about the legend in the inference of semantic information.

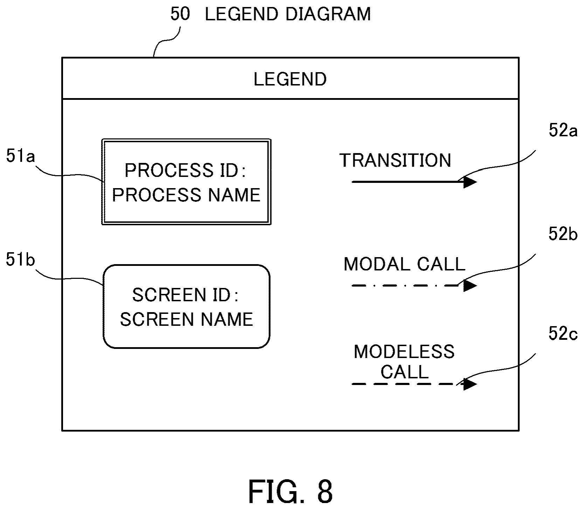

FIG. 8 illustrates an example of the legend diagram. For example, the legend for the nodes and edges in the screen system diagram 30 is described in a legend diagram 50. For example, a process node example 51a indicates the shape of the process nodes 31a and 31b and the meanings of the characters displayed in the process nodes 31a and 31b. According to the process node example 51a, each process node 31a and 31b is a double-lined rectangle and displays a process ID and a process name therein.

A screen node example 51b indicates the shape of the screen nodes 32a and 32b and the meanings of the characters displayed in the screen nodes 32a and 32b. According to the screen node example 51b, each screen node 32a and 32b is a rectangle with rounded corners and displays a screen ID and a screen name therein.

An edge example 52a indicates the type of an edge representing a screen transition. According to the edge example 52a, an edge representing a screen transition is a solid arrow. An edge example 52b indicates the type of an edge representing a modal call. According to the edge example 52b, an edge representing a modal call is a dashed-dotted arrow. An edge example 52c indicates the type of an edge representing a modeless call. According to the edge example 52c, an edge representing a modeless call is a dashed arrow.

By causing the LLM 210 to recognize a flow diagram based on the above legend diagram 50, the accuracy of recognizing the flow diagram is improved. In the case where no legend diagram 50 is provided, for example, the flow diagram analysis control unit 120 may cause the LLM 210 to enumerate nodes for each identical shape and then cause the LLM 210 to infer the meanings of the nodes for each shape. In the field of software engineering, it is highly likely that the shapes of nodes are uniformized and meaningful. Therefore, by causing the LLM 210 to infer the meanings of nodes for each identical shape, the accuracy of inferring the meanings is improved.

Next, a procedure for executing a task using the LLM 210 with respect to a document including a flow diagram will be specifically described.

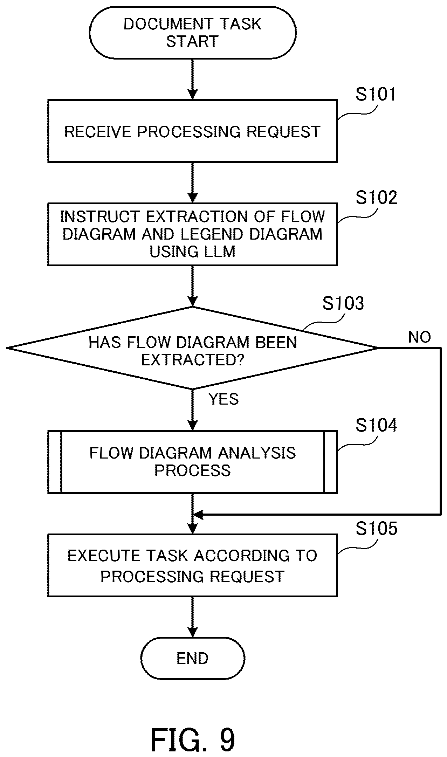

FIG. 9 is a flowchart illustrating an example procedure for a document task. Hereinafter, the process illustrated in FIG. 9 will be described in order of step numbers.

[Step S101] The document processing unit 110 receives a processing request for a document. The processing request specifies a document to be processed. For example, the processing request includes the document to be processed. Alternatively, the processing request may indicate the storage location (path) and file name of the document.

[Step S102] The document processing unit 110 transmits, to the server 200, an instruction to extract a flow diagram and a legend diagram using the LLM 210. This extraction instruction is, for example, a text in natural language. The extraction instruction includes the document to be processed.

In the server 200, the dialogue system 220 converts the extraction instruction into input data to the LLM 210. The dialogue system 220 inputs the converted input data to the LLM 210, performs processing using the LLM 210, and obtains output data. The dialogue system 220 generates response data based on the output data obtained from the LLM 210. The output data includes, for example, the extracted flow diagram or legend diagram. The dialogue system 220 transmits the response data to the document processing unit 110.

[Step S103] The document processing unit 110 determines whether a flow diagram has been extracted through the extraction process using the LLM 210. If the flow diagram has been extracted, the document processing unit 110 instructs the flow diagram analysis control unit 120 to analyze the flow diagram, and advances the process to step S104. If no flow diagram has been extracted, the document processing unit 110 advances the process to step S105.

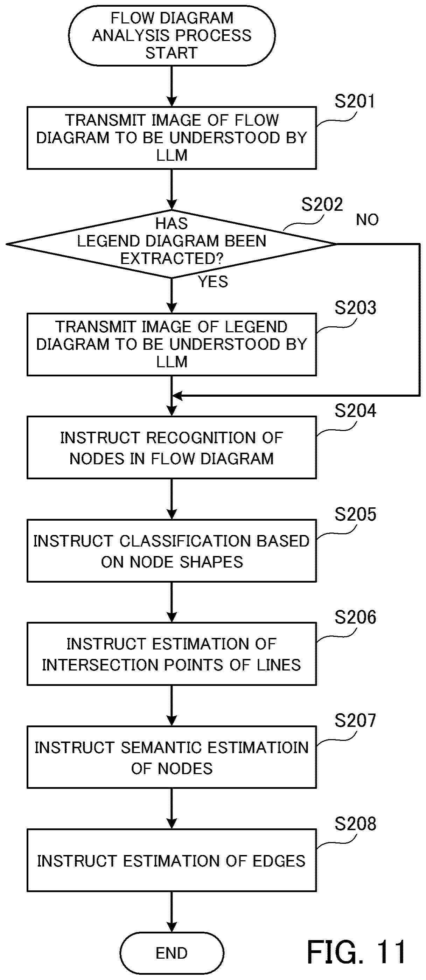

[Step S104] The flow diagram analysis control unit 120 performs a flow diagram analysis process. Details of the flow diagram analysis process will be described later (see FIG. 11). The flow diagram analysis control unit 120 transmits the result of the flow diagram analysis process to the document processing unit 110.

[Step S105] The document processing unit 110 executes a document processing task according to the processing request. At this time, if the result of analyzing the flow diagram is available, the document processing unit 110 executes the task using the analysis result.

As described above, in the case where the document to be processed includes a flow diagram, the task is executed using the result of analyzing the flow diagram. In the case where the document to be processed includes a legend diagram for the flow diagram, the LLM is caused to recognize the legend diagram, thereby improving the accuracy of recognizing the flow diagram.

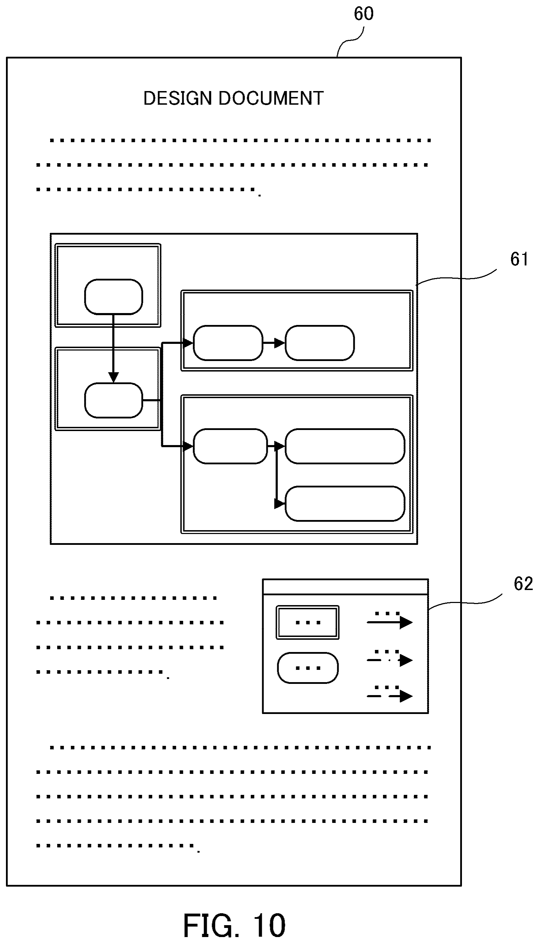

FIG. 10 illustrates an example of a document to be processed. The document to be processed illustrated in FIG. 10 is a design document 60 for software system development. The design document 60 describes the specifications of software, and others. The design document 60 includes a flow diagram 61 representing the specifications of the software. The design document 60 also includes a legend diagram 62 describing the legend of the flow diagram 61.

For example, when a processing request for a task of reviewing the design document 60 is input to the document processing unit 110, the document processing unit 110 transmits, to the server 200, an instruction to extract the flow diagram 61 and the legend diagram 62 from the design document 60. Then, the server 200 extracts the flow diagram 61 and the legend diagram 62 using the LLM 210. After the flow diagram 61 is extracted, the document processing unit 110 instructs the flow diagram analysis control unit 120 to perform a flow diagram analysis process.

FIG. 11 is a flowchart illustrating an example procedure for the flow diagram analysis process. Hereinafter, the process illustrated in FIG. 11 will be described in order of step numbers.

[Step S201] The flow diagram analysis control unit 120 transmits, to the server 200, the image of a flow diagram to be understood by the LLM 210. In the server 200, the dialogue system 220 inputs, to the LLM 210, the image of the flow diagram together with a text instructing image understanding. Then, the dialogue system 220 performs processing using the LLM 210 and obtains output data. The output data is information such as lines and texts included in the image. The dialogue system 220 stores the output data in a memory or the like, and transmits response data indicating that the flow diagram has been understood, to the document processing unit 110.

[Step S202] The flow diagram analysis control unit 120 determines whether a legend diagram has been extracted in step S102 (see FIG. 9). If a legend diagram has been extracted, the flow diagram analysis control unit 120 advances the process to step S203. If no legend diagram has been extracted, the flow diagram analysis control unit 120 advances the process to step S204.

[Step S203] The flow diagram analysis control unit 120 transmits, to the server 200, the image of the legend diagram to be understood by the LLM 210. In the server 200, the dialogue system 220 inputs, to the LLM 210, the image of the legend diagram together with a text instructing image understanding. Then, the dialogue system 220 performs processing using the LLM 210 and obtains output data. The output data is information such as an example of nodes and the description thereof, and an example of edges and the description thereof, indicated in the legend. The dialogue system 220 stores the output data in a memory or the like, and transmits response data indicating that the legend diagram has been understood, to the document processing unit 110.

[Step S204] The flow diagram analysis control unit 120 transmits, to the server 200, an instruction to recognize nodes in the flow diagram. In the server 200, the dialogue system 220 inputs, to the LLM 210, the results of recognizing the flow diagram and others in steps S201 to S203 and a text instructing node recognition. Then, the dialogue system 220 performs processing using the LLM 210 and obtains output data. The output data is information on the nodes estimated to be included in the flow diagram. The dialogue system 220 stores the output data in a memory or the like, and transmits response data indicating information on the recognized nodes to the document processing unit 110.

[Step S205] The flow diagram analysis control unit 120 transmits, to the server 200, an instruction to classify nodes based on their shapes. In the server 200, the dialogue system 220 inputs, to the LLM 210, the recognition results obtained in steps S201 to S204 and a text instructing node classification based on shape. Then, the dialogue system 220 performs processing using the LLM 210 and obtains output data. The output data is a list of nodes for each identical shape. The dialogue system 220 stores the output data in a memory or the like, and transmits response data indicating information obtained by classifying the recognized nodes based on their shapes, to the document processing unit 110.

[Step S206] The flow diagram analysis control unit 120 transmits, to the server 200, an instruction to estimate the intersection points of lines. In the server 200, the dialogue system 220 inputs, to the LLM 210, the recognition results obtained in steps S201 to S205, together with data indicating the instruction to estimate the intersection points of lines. Then, the dialogue system 220 performs processing using the LLM 210 and obtains output data. The output data is information indicating the intersection points of lines. The dialogue system 220 stores the output data in a memory or the like and transmits response data indicating the intersection points of lines to the document processing unit 110.

[Step S207] The flow diagram analysis control unit 120 transmits, to the server 200, an instruction to perform the semantic estimation of nodes. In the server 200, the dialogue system 220 inputs, to the LLM 210, the recognition results obtained in steps S201 to S205, the intersection points of lines estimated in step S206, and data instructing the semantic estimation of nodes. Then, the dialogue system 220 performs processing using the LLM 210 and obtains output data. The output data is information indicating the result of estimating the meanings of nodes. The dialogue system 220 stores the output data in a memory or the like, and transmits response data indicating the result of estimating the meanings of nodes to the document processing unit 110.

[Step S208] The flow diagram analysis control unit 120 transmits an instruction to estimate edges to the server 200. In the server 200, the dialogue system 220 inputs, to the LLM 210, the recognition results obtained in steps S201 to S205, the estimation results obtained in steps S206 and S207, and data instructing the estimation of edges. Then, the dialogue system 220 performs processing using to the LLM 210 and obtains output data. The output data is information indicating the result of estimating edges. The dialogue system 220 stores the output data in a memory or the like, and transmits response data indicating the result of estimating edges to the document processing unit 110.

As described above, the recognition and semantic estimation of nodes, which have high recognition accuracy, are performed first, and then the estimation of edges is performed. Since the nodes are estimated with high accuracy first, the subsequent estimation of edges also achieves higher accuracy. As a result, the flow diagram is recognized with high accuracy.

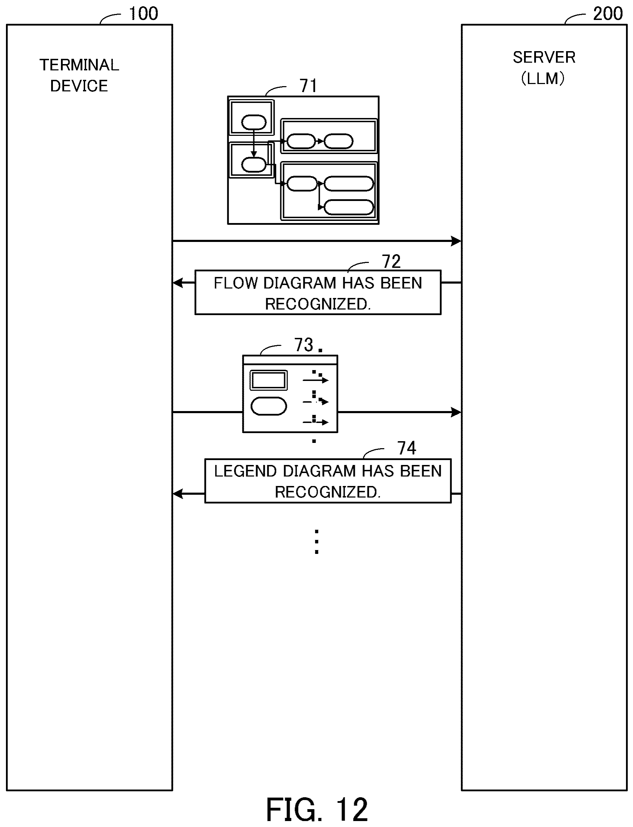

Hereinafter, examples of prompts, which are transmitted from the terminal device 100 to the server 200 for recognizing the content of a flow diagram, and responses to the prompts will be described with reference to FIGS. 12 to 17.

FIG. 12 is a diagram (1/6) illustrating an example of flow diagram analysis. Image data 71 of a flow diagram is transmitted from the terminal device 100 to the server 200. The server 200 performs image recognition of the flow diagram using the LLM 210. The server 200 transmits response data 72 indicating that the image of the flow diagram has been recognized, to the terminal device 100.

In the case where a legend diagram is present, then image data 73 of the legend diagram is transmitted from the terminal device 100 to the server 200. The server 200 performs image recognition of the legend diagram using the LLM 210. The server 200 transmits response data 74 indicating that the legend diagram has been recognized, to the terminal device 100.

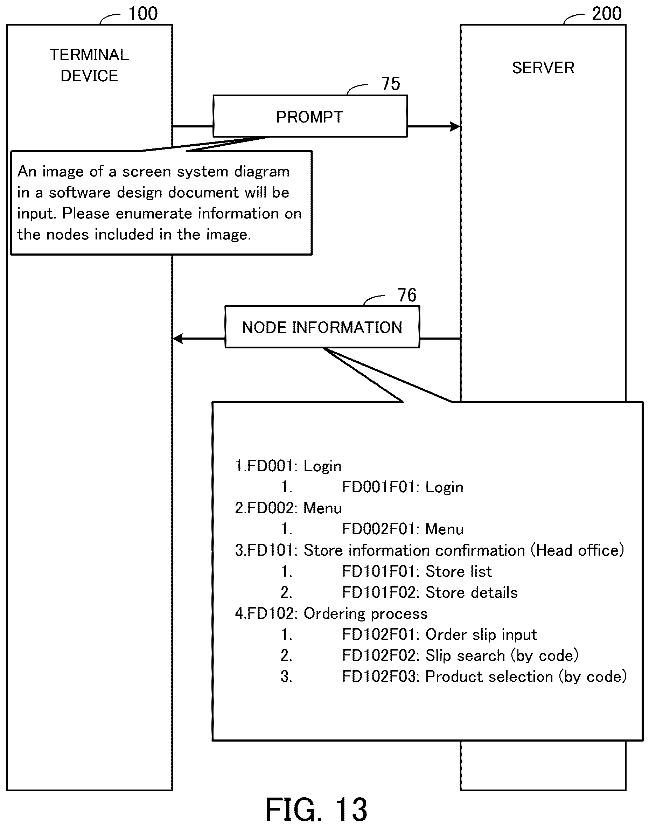

FIG. 13 is a diagram (2/6) illustrating the example of the flow diagram analysis. A prompt 75 instructing the extraction of node information from the flow diagram is transmitted from the terminal device 100 to the server 200. For example, the prompt 75 may be a text such as "An image of a screen system diagram in a software design document will be input. Please enumerate information on the nodes included in the image." The server 200 generates node information 76 using the LLM 210 in response to the prompt 75. Then, the server 200 transmits the generated node information 76 to the terminal device 100.

For example, in the case where the flow diagram is the screen system diagram 30 illustrated in FIG. 4, the node information 76 is the following text.
"1. FD001: Login
   1. FD001F01: Login
2. FD002: Menu
   1. FD002F01: Menu
3. FD101: Store information confirmation (Head office)
   1. FD101F01: Store list
   2. FD101F02: Store details
4. FD102: Ordering process
   1. FD102F01: Order slip input
   2. FD102F02: Slip search (by code)
   3. FD102F03: Product selection (by code)".

The nodes in the flow diagram are extracted in this manner. At this stage, only the nodes and the texts in the nodes are extracted, and the meanings of the nodes are not yet interpreted.

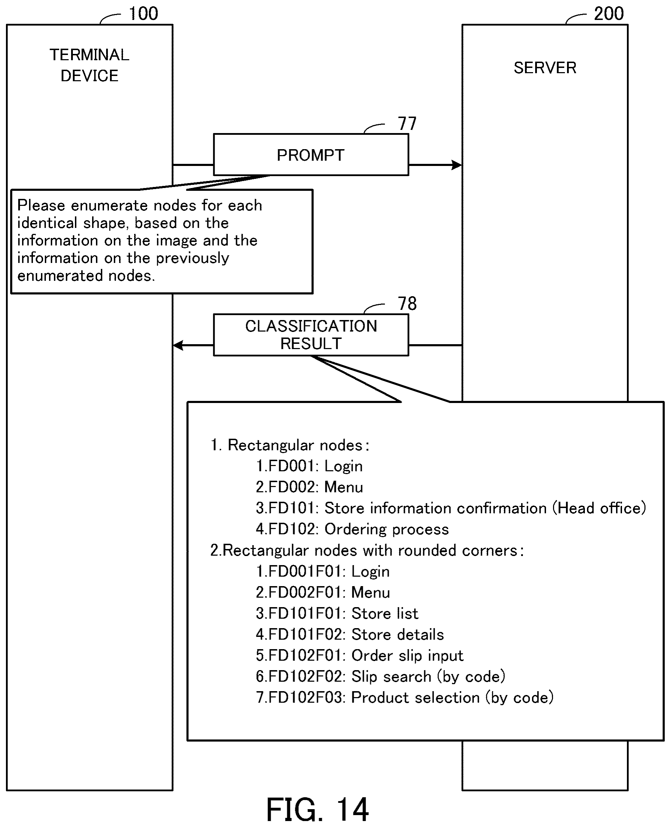

FIG. 14 is a diagram (3/6) illustrating the example of the flow diagram analysis. A prompt 77 instructing the enumeration of nodes (classification of nodes) for each identical shape is transmitted from the terminal device 100 to the server 200. For example, the prompt 77 is a text such as "Please enumerate nodes for each identical shape, based on the information on the image and the information on the previously enumerated nodes." The server 200 generates a classification result 78 using the LLM 210 in response to the prompt 77. Then, the server 200 transmits the generated classification result 78 to the terminal device 100.

For example, in the case where the flow diagram is the screen system diagram 30 illustrated in FIG. 4, the classification result 78 is the following text.

### "1. Rectangular nodes:

1. FD001: Login
2. FD002: Menu
3. FD101: Store information confirmation (Head office)
4. FD102: Ordering process

### 2. Rectangular nodes with rounded corners:

1. FD001F01: Login
2. FD002F01: Menu
3. FD101F01: Store list
4. FD101F02: Store details
5. FD102F01: Order slip input
**6.** FD102F02: Slip search (by code)
**7.** FD102F03: Product selection (by code)"

In this way, the nodes are classified based on the shapes of the symbols representing the nodes. It may be estimated that nodes having the same shape represent similar meanings.

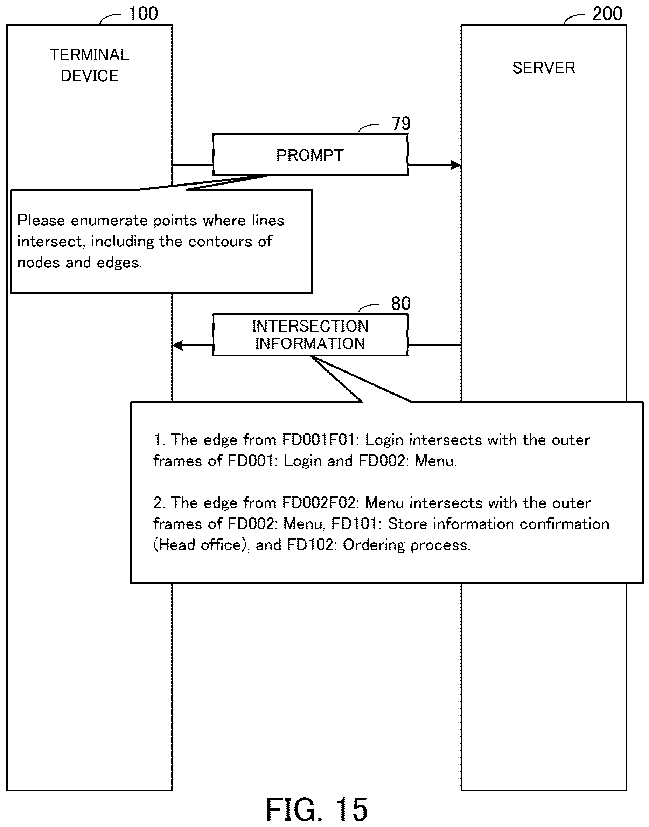

FIG. 15 is a diagram (4/6) illustrating the example of the flow diagram analysis. A prompt 79 instructing the enumeration of intersection points of lines is transmitted from the terminal device 100 to the server 200. For example, the prompt 79 may be a text such as "Please enumerate points where lines intersect, including the contours of nodes and edges." The server 200 generates intersection information 80 using the LLM 210 in response to the prompt 79. Then, the server 200 transmits the generated intersection information 80 to the terminal device 100. The intersection information 80 indicates information on the intersection points.

For example, in the case where the flow diagram is the screen system diagram 30 illustrated in FIG. 4, the intersection information 80 is the following text.
"1. The edge from FD001F01: Login intersects with the outer frames of FD001: Login and FD002: Menu.
2. The edge from FD002F02: Menu intersects with the outer frames of FD002: Menu, FD101: Store information confirmation (Head office), and FD102: Ordering process."

By causing the server 200 to generate such intersection information 80, the terminal device 100 is able to cause the server 200 to perform inference focusing on the vicinity of the intersection points in the subsequent inference process.

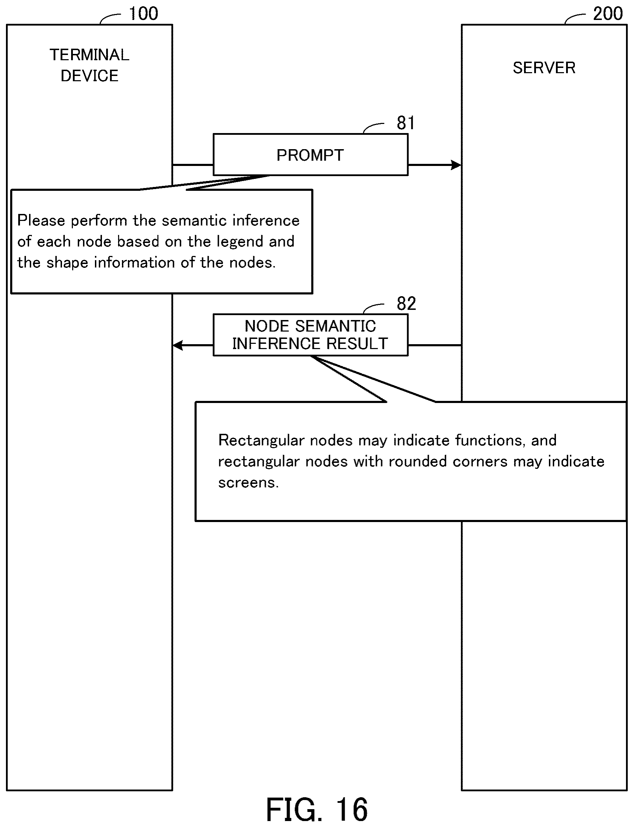

FIG. 16 is a diagram (5/6) illustrating the example of the flow diagram analysis. A prompt 81 instructing the semantic inference of nodes is transmitted from the terminal device 100 to the server 200. For example, the prompt 81 may be a text such as "Please perform the semantic inference of each node based on the legend and the shape information of the nodes." The server 200 generates a node semantic inference result 82 using the LLM 210 in response to the prompt 81. Then, the server 200 transmits the generated node semantic inference result 82 to the terminal device 100.

For example, in the case where the flow diagram is the screen system diagram 30 illustrated in FIG. 4, the node semantic inference result 82 is a text such as "Rectangular nodes may indicate functions, and rectangular nodes with rounded corners may indicate screens."

By estimating edges after the meanings of nodes are recognized correctly, the edges may be recognized correctly.

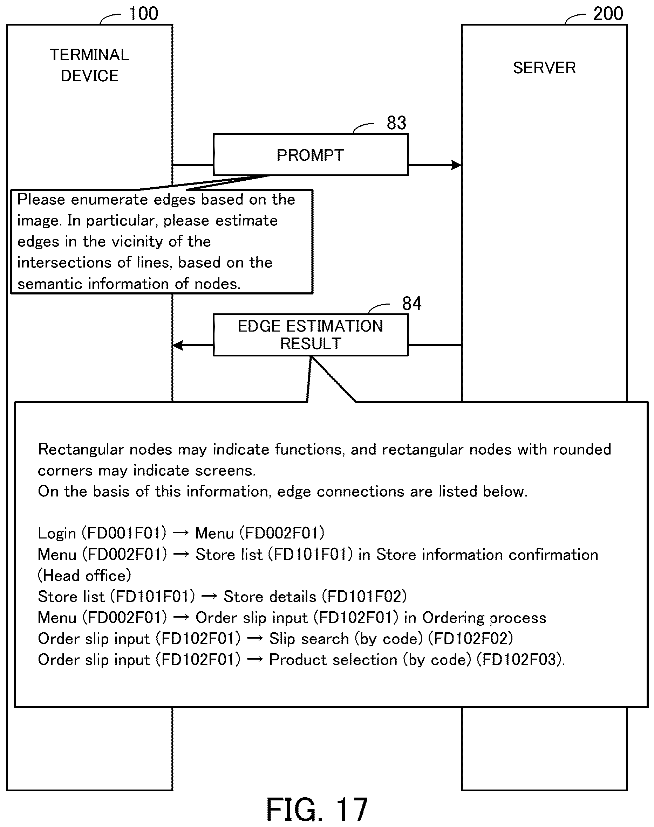

FIG. 17 is a diagram (6/6) illustrating the example of the flow diagram analysis. A prompt 83 instructing the estimation of edges is transmitted from the terminal device 100 to the server 200. For example, the prompt 83 is a text such as "Please enumerate edges based on the image. In particular, please estimate edges in the vicinity of the intersections of lines, based on the semantic information of nodes." The server 200 generates an edge estimation result 84 using the LLM 210 in response to the prompt 83. Then, the server 200 transmits the generated edge estimation result 84 to the terminal device 100.

For example, in the case where the flow diagram is the screen system diagram 30 illustrated in FIG. 4, the edge estimation result 84 is the following text.
"Rectangular nodes may indicate functions, and rectangular nodes with rounded corners may indicate screens.
On the basis of this information, edge connections are listed below.
Login (FD001F01) → Menu (FD002F01)
Menu (FD002F01) → Store list (FD101F01) in Store information confirmation (Head office)
Store list (FD101F01) → Store details (FD101F02)
Menu (FD002F01) → Order slip input (FD102F01) in Ordering process
Order slip input (FD102F01) → Slip search (by code) (FD102F02)
Order slip input (FD102F01) → Product selection (by code) (FD102F03)."

In this manner, the nodes and the edges connecting the nodes in the screen system diagram 30 are recognized with high accuracy. By correctly recognizing the flow diagram, it becomes possible to execute a task for the document to be processed with high accuracy. For example, in the case where a task is to review the software design document, it is precisely checked whether the flow diagram is consistent with other descriptions.

The content of each prompt illustrated in FIGS. 13 to 17 is set in advance in, for example, a storage area managed by the flow diagram analysis control unit 120 of the terminal device 100. Then, at the timing of issuing an instruction to the server 200, the flow diagram analysis control unit 120 retrieves a prompt corresponding to the content of the instruction, and transmits the prompt to the server 200.

The above-described processing improves the recognition accuracy, even for hand-drawn flow diagrams, for example.

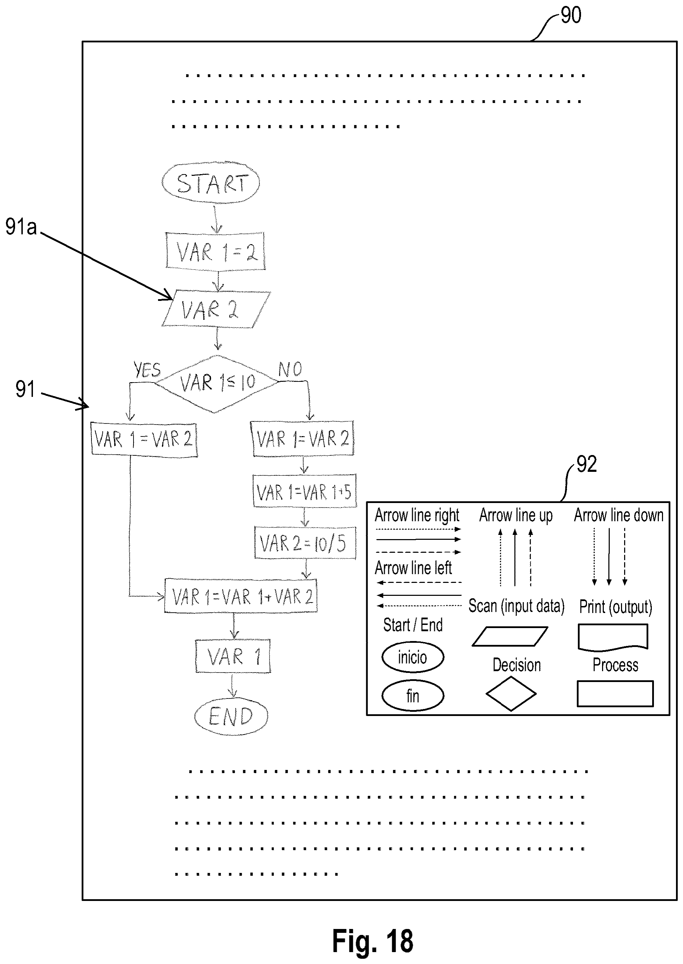

FIG. 18 illustrates an example of a document including a hand-drawn flow diagram. A document 90 includes a hand-drawn flow diagram 91 and a legend diagram 92. The flow diagram 91 includes, for example, a parallelogram node 91a. The parallelogram node 91a has a different meaning from a rectangular node. However, in the hand-drawn flow diagram 91, it may be difficult to correctly recognize the parallelogram node 91a. In this case, the legend diagram 92 is used effectively to improve the accuracy of recognizing the parallelogram node 91a.

For example, the terminal device 100 instructs the server 200 to perform the image understanding of the flow diagram 91 using the LLM 210 and to perform the image understanding of the legend diagram 92 using the LLM 210.

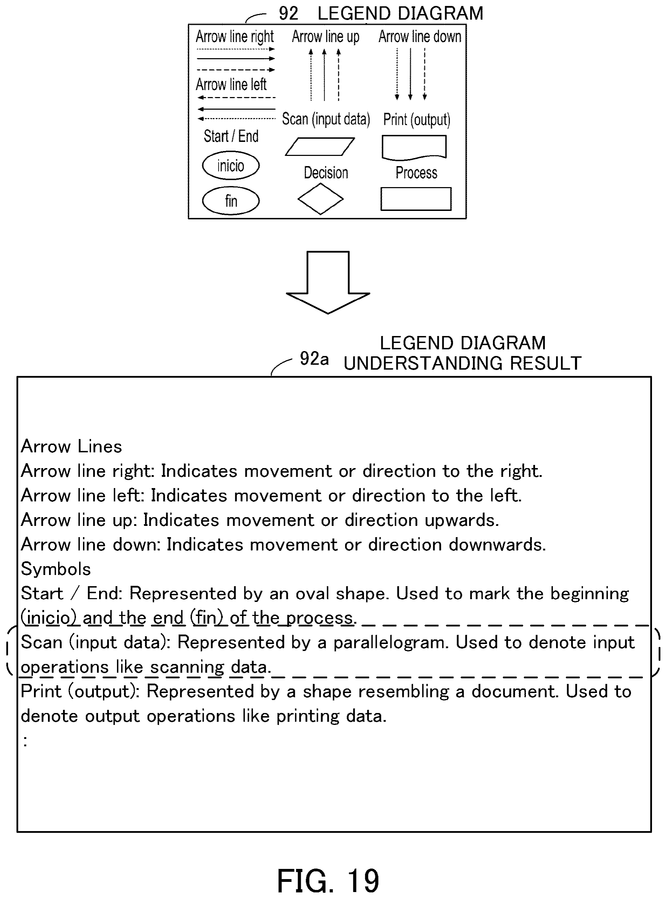

FIG. 19 illustrates an example of the image understanding of the legend diagram. When the server 200 performs the image understanding of the legend diagram 92 using the LLM 210, a legend diagram understanding result 92a is output from the LLM 210. In the region enclosed by a broken line in the legend diagram understanding result 92a, a parallelogram node represents a data input (input data). When the terminal device 100 instructs the server 200 to perform the semantic inference of nodes thereafter, the server 200 infers the meanings of nodes using the legend diagram understanding result 92a.

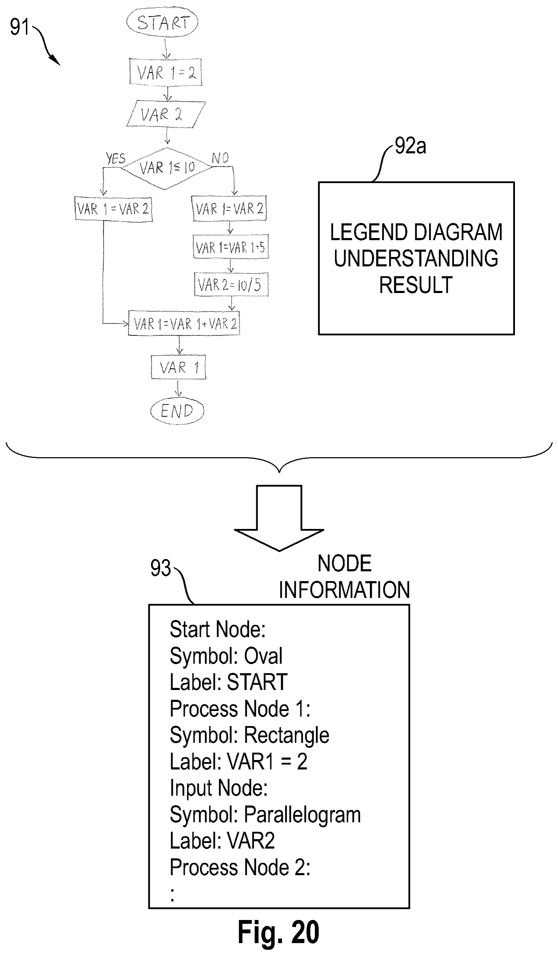

FIG. 20 illustrates an example of a result of inferring the meanings of nodes. The rectangular shapes obtained by performing the image understanding of the flow diagram 91 and the legend diagram understanding result 92a are input to the LLM 210, and the meanings of the nodes are inferred. Then, for example, node information 93 is output. The node information 93 indicates the nodes in the flow diagram 91 and the meanings of the nodes. The entire flow diagram 91 may be recognized by recognizing edges connecting the nodes based on the node information 93.

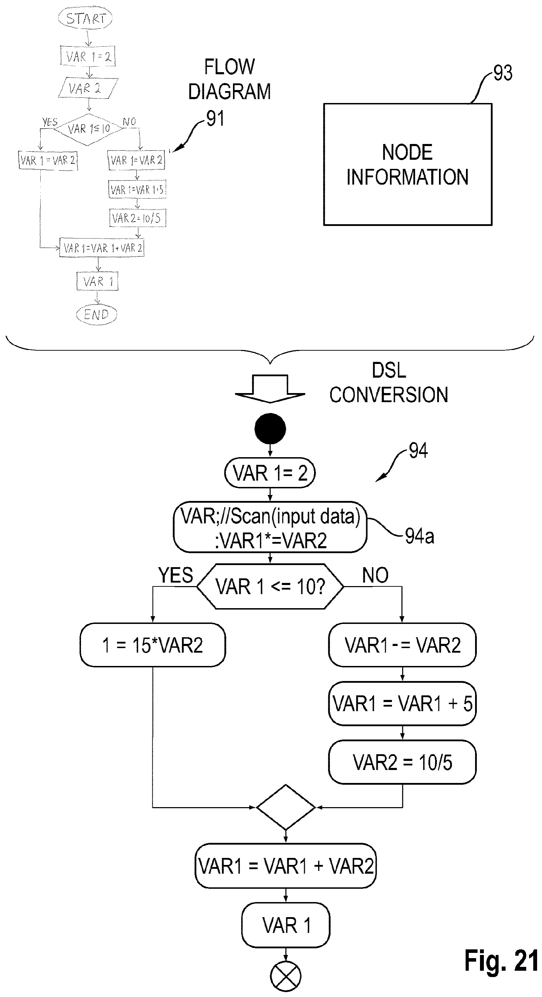

FIG. 21 illustrates an example of a result of recognizing the flow diagram. Based on the flow diagram 91 and the node information 93, the flow diagram 91 formed of nodes and edges is entirely recognized using the LLM 210. For example, by converting the information on the recognized flow diagram 91 into domain-specific language (DSL), flow diagram data representing the flow diagram 91 is generated. Based on the flow diagram data, a recognized flow diagram 94 is displayed. In the recognized flow diagram 94, the node represented as the parallelogram in the flow diagram 91 is correctly recognized as a data input node 94a.

As described above, in the multimodal system configured to handle the image recognition result of a flow diagram using an LLM, the terminal device 100 first causes the server 200 to perform inference using the LLM 210 for information with high recognition accuracy, such as node information. Further, the terminal device 100 causes the server 200 to infer the semantic information of the nodes using the LLM 210. On the basis of the inference results, the terminal device 100 causes the server 200 to infer edges using the LLM 210 in a stepwise manner. As a result, the accuracy of inferring edges, which are originally difficult to recognize with high accuracy, is improved, which makes it possible to provide accurate information in response to questions and requests from a user in the utilization of the LLM 210.

### [Other Embodiments]

In the second embodiment, the terminal device 100 and the server 200 cooperate with each other to recognize a flow diagram. Alternatively, for example, the functions of the terminal device 100 and the functions of the server 200 may be implemented in one computer.

In addition, it is possible to recognize the content of diagrams (for example, graphs) other than flow diagrams with high accuracy through the processing described in the second embodiment, as long as the diagrams are formed of nodes and edges.

Furthermore, in the case where two types of objects having different recognition accuracies are included in an image, the accuracy of recognizing the objects that have lower recognition accuracy may be improved through the same processing as in the second embodiment. For example, the terminal device 100 first causes the LLM 210 to recognize the objects that have higher recognition accuracy, and then causes the LLM 210 to recognize, using the result, the objects that have lower recognition accuracy.

Although the embodiments have been described above, the configuration of each unit described in the embodiments may be replaced with another unit having the same function. In addition, any other components or processes may be added. Furthermore, any two or more configurations (features) of the above-described embodiments may be combined.

According to one aspect, the accuracy of data recognition is improved.

## Claims

1. A computer program that causes a computer to perform a process comprising:
inputting a first directive (4a) to a dialogue system (12a) that uses a machine learning model (3), the first directive (4a) instructing estimation of a plurality of first information items based on data (1) including the plurality of first information items and a plurality of second information items, the plurality of second information items representing relationships between the plurality of first information items;
inputting a second directive (4b) to the dialogue system (12a), the second directive (4b) instructing semantic estimation of the first information items based on third information related to meanings of the first information items;
inputting a third directive (4c) to the dialogue system (12a), the third directive (4c) instructing estimation of the second information items based on the data (1); and
acquiring, from the dialogue system (12a), output information (4g) generated based on the second information items estimated in response to the third directive (4c).

2. The computer program according to claim 1, wherein the inputting of the third directive to the dialogue system is performed after the inputting of the first directive to the dialogue system and the inputting of the second directive to the dialogue system.

3. The computer program according to claim 1, wherein the dialogue system performs dialogue in natural language based on chain-of-thought reasoning using the machine learning model.

4. The computer program according to any one of claims 1 to 3, wherein
the process further includes inputting a fourth directive (4d) to the dialogue system (12a), the fourth directive (4d) instructing recognition of a legend (2) indicating a display mode for each meaning of the first information items, and
the inputting of the second directive (4b) to the dialogue system (12a) includes using, as the third information, information about the legend (2) recognized in response to the fourth directive (4d).

5. The computer program according to any one of claims 1 to 3, wherein
the first information items are represented by symbols that differ in shape depending on the meanings of the first information items,
the process further includes inputting a fifth directive (4e) to the dialogue system (12a), the fifth directive (4e) instructing classification of the first information items based on shapes of the first information items, and
the inputting of the second directive (4b) to the dialogue system (12a) includes using, as the third information, a result of classifying the first information items in response to the fifth directive (4e).

6. The computer program according to any one of claims 1 to 3, wherein
the first information items are represented by symbols that differ in shape depending on the meanings of the first information items,
the second information items are represented by lines drawn between the symbols,
the process further includes inputting a sixth directive (4f) to the dialogue system (12a), the sixth directive (4f) instructing estimation of an intersection between the symbols and the lines, and
the inputting of the third directive (4c) to the dialogue system (12a) includes using, as the third directive (4c), a text instructing the estimation of the second information items in which importance is placed on meanings of first information items related to the intersection estimated in response to the sixth directive (4f).

7. An information processing method executed by a computer, the information processing method comprising:
inputting a first directive (4a) to a dialogue system (12a) that uses a machine learning model (3), the first directive (4a) instructing estimation of a plurality of first information items based on data (1) including the plurality of first information items and a plurality of second information items, the plurality of second information items representing relationships between the plurality of first information items;
inputting a second directive (4b) to the dialogue system (12a), the second directive (4b) instructing semantic estimation of the first information items based on third information related to meanings of the first information items;
inputting a third directive (4c) to the dialogue system (12a), the third directive (4c) instructing estimation of the second information items based on the data (1); and
acquiring, from the dialogue system (12a), output information (4g) generated based on the second information items estimated in response to the third directive (4c).

8. An information processing apparatus comprising:
processing means for
inputting a first directive (4a) to a dialogue system (12a) that uses a machine learning model (3), the first directive (4a) instructing estimation of a plurality of first information items based on data (1) including the plurality of first information items and a plurality of second information items, the plurality of second information items representing relationships between the plurality of first information items;
inputting a second directive (4b) to the dialogue system (12a), the second directive (4b) instructing semantic estimation of the first information items based on third information related to meanings of the first information items;
inputting a third directive (4c) to the dialogue system (12a), the third directive (4c) instructing estimation of the second information items based on the data (1); and
acquiring, from the dialogue system (12a), output information (4g) generated based on the second information items estimated in response to the third directive (4c).
